# DEMANDE DE BREVET EUROPEEN

(11) **EP 4 686 737 A1**
(43) Date de publication de la demande: **04.02.2026**
(21) Numéro de dépôt: 25192285.2
(22) Date de dépôt: 28.07.2025
(51) Int. Cl.: C08L 19/00, C08L 23/12, C08L 53/00, C08L 23/26, C08K 5/01

(54) **MATÉRIAU THERMOPLASTIQUE ÉLASTOMÈRE COMPRENANT UNE DISPERSION DE PARTICULES DE CAOUTCHOUC PRÉALABLEMENT RÉTICULÉ ET SON PROCÉDÉ DE FABRICATION**

(30) Priorité: 29.07.2024 FR 2408377
(71) Demandeur: Elastever, 49000 Angers (FR)
(72) Inventeur: PIGANEAU, Nicolas, 49000 Angers (FR)
(74) Mandataire: Arino, Julie

(57) **Abrégé**

La présente invention concerne matériau thermoplastique élastomère comprenant :
- une matrice thermoplastique élastomère,
- des particules de caoutchouc préalablement réticulé dispersées dans ladite matrice,
ledit matériau thermoplastique élastomère étant caractérisé en ce que :
- lesdites particules de caoutchouc réticulé représentent 50 à 90% en poids du poids total dudit matériau thermoplastique élastomère, et
- ladite matrice thermoplastique représente 10 à 50 % en poids du poids total dudit matériau thermoplastique élastomère, ladite matrice thermoplastique élastomère comprenant un mélange d'un ou plusieurs polymères thermoplastiques greffés durs et/ou mous, un ou plusieurs polymères thermoplastiques non greffés durs et/ou mous, et un plastifiant, et lesdits polymères thermoplastiques greffés durs et/ou mous représentant au plus 9% en poids du poids total dudit matériau thermoplastique élastomère.

L'invention concerne également le procédé d'obtention d'un tel matériau.

## Description

### Domaine technique de l'invention

La présente invention concerne un matériau thermoplastique élastomère à propriétés mécaniques améliorées, ainsi que son procédé de fabrication, ledit matériau thermoplastique élastomère comprenant une matrice thermoplastique élastomère dans laquelle sont dispersées des particules de caoutchouc préalablement réticulé.

### Arrière-plan technique

Les élastomères thermoplastiques (usuellement désignés par l'acronyme TPE) se sont dernièrement imposés sur le plan économique car ils combinent de bonnes propriétés mécaniques et des propriétés élastiques remarquables.

Parmi les TPE, on connait notamment les thermoplastiques vulcanisés (usuellement désignés par l'acronyme TPV) qui contiennent une phase élastomère réticulée dynamiquement et dispersée dans une phase thermoplastique formant matrice.

De tels matériaux ne permettent pas d'utiliser des élastomères préalablement réticulés, notamment issus du recyclage. Pour résoudre ce problème et permettre l'intégration de caoutchouc réticulé dans la matrice thermoplastique, l'homme de l'art a mis au point des composés TPE fabriqués à partir d'un matériau thermoplastique dur (par exemple du polypropylène), associé à des élastomères préalablement réticulés, notamment issus du recyclage.

Pour permettre une répartition finement dispersée de l'élastomère préalablement réticulé dans la matrice thermoplastique, il est connu de l'homme de l'art d'utiliser différents intermédiaires réactionnels favorisant les interactions entre la matrice thermoplastique et l'élastomère.

Ainsi, le modèle d'utilité allemand DE 295 157 21 U1 décrit un matériau thermoplastique modifié par du caoutchouc broyé. Il décrit plus particulièrement l'insertion d'élastomère broyé, tel que du caoutchouc recyclé, dans une matrice de thermoplastique élastomère (TPE). La matrice peut être composée de polypropylène mélangé à un caoutchouc éthylène-propylène-diène monomère (usuellement désigné par l'acronyme EPDM). Pour améliorer la liaison entre le polymère de la matrice et l'élastomère, il est possible d'utiliser des générateurs de radicaux (par exemple peroxydes) ou des acides (par exemple un anhydride maléique) ou des copolymères fonctionnalisés.

Par ailleurs, la demande de brevet européen EP 0 649 871 A2 enseigne une composition thermoplastique qui comprend du caoutchouc vulcanisé et de la résine polyoléfine, cette composition étant améliorée par incorporation de résine polyoléfine fonctionnalisée. Dans le procédé d'obtention de la composition, on mélange le caoutchouc, la résine polyoléfine et la résine polyoléfine fonctionnalisée, en une seule étape, ou au contraire en deux étapes successives, avec une première étape consistant à mélanger le caoutchouc avec la résine polyoléfine, puis une étape supplémentaire consistant à mélanger le mélange obtenu à la première étape avec la résine polyoléfine fonctionnalisée.

Toutefois, le procédé enseigné par le document EP 0 649 871 A2 présente l'inconvénient de nécessiter une quantité élevée de copolymères fonctionnalisés (au moins 10% en poids, notamment de l'ordre de 25% en poids), qui sont généralement très coûteux, alors que la poudre d'élastomère est de la poudre de caoutchouc issue du recyclage, qui est peu coûteuse. La présente invention a notamment pour objectif de pallier ces inconvénients de l'art antérieur.

En particulier, l'invention a notamment pour objectif de fournir un matériau thermoplastique élastomère présentant de bonnes caractéristiques mécaniques.

Un autre objectif de l'invention, selon certains de ses modes de réalisation, est de fournir un tel matériau pouvant être fabriqué pour un coût réduit.

Un objectif particulier de l'invention, selon certains de ses modes de réalisation, est de fournir un tel matériau intégrant une grande quantité de particules de caoutchouc préalablement réticulé.

### Résumé de l'invention

L'un des objets de la présente invention est donc un matériau thermoplastique élastomère comprenant :
- une matrice thermoplastique élastomère,
- des particules de caoutchouc préalablement réticulé dispersées dans ladite matrice,
ledit matériau thermoplastique élastomère étant caractérisé en ce que :
- lesdites particules de caoutchouc réticulé représentent 50 à 90% en poids du poids total dudit matériau thermoplastique élastomère, et
- ladite matrice thermoplastique représente 10 à 50% en poids du poids total dudit matériau thermoplastique élastomère, ladite matrice thermoplastique élastomère comprenant un mélange d'un ou plusieurs polymères thermoplastiques greffés durs et/ou mous, un ou plusieurs polymères thermoplastiques non greffés durs et/ou mous, et un plastifiant, et lesdits polymères thermoplastiques greffés durs et/ou mous représentant au plus 9% en poids du poids total dudit matériau thermoplastique élastomère.

Un autre objet de la présente invention est un procédé de fabrication d'un matériau thermoplastique élastomère comprenant une dispersion de particules de caoutchouc préalablement réticulé dans une matrice thermoplastique élastomère, ladite matrice thermoplastique élastomère comprenant un mélange d'un ou plusieurs polymères thermoplastiques greffés durs et/ou mous, un ou plusieurs polymères thermoplastiques non greffés durs et/ou mous, et un plastifiant,
lesdites particules de caoutchouc réticulé représentant 50 à 90% en poids du poids total dudit matériau thermoplastique élastomère,
ladite matrice thermoplastique représentant 10 à 50% en poids du poids total dudit matériau thermoplastique élastomère, et lesdits polymères thermoplastiques greffés durs et/ou mous représentant au plus 9% en poids du poids total dudit matériau thermoplastique élastomère.

### Matrice thermoplastique élastomère

Par polymères durs (qu'ils soient greffés ou non), on entend, au sens de la présente invention, des polymères présentant une dureté supérieure à 95 Shore A.

A contrario, par polymères mous (qu'ils soient greffés ou non), on entend, au sens de la présente invention, des polymères présentant une dureté inférieure à 95 Shore A.

A titre d'exemples de polymères thermoplastiques durs, qu'ils soient ou non greffés, on peut notamment citer les polymères choisis dans le groupe comprenant les polyoléfines (de préférence un polypropylène, usuellement désigné par l'acronyme PP) et le polystyrène (usuellement désigné par l'acronyme PS), et à titre d'exemples de polymères thermoplastiques mous, qu'ils soient ou non greffés, on peut notamment citer les copolymères thermoplastiques élastomères.

De préférence, les polymères thermoplastiques mous, qu'ils soient ou non greffés, pourront être choisis dans le groupe comprenant les copolymères bloc styréniques, les thermoplastiques vulcanisés (usuellement désignés par l'acronyme TPV) de type monomère éthylène propylène diène vulcanisé dynamiquement (usuellement désigné par l'acronyme EPDM) dans une matrice polypropylène (PP/EPDM), les éthylènes vinyle acétate (usuellement désignés par l'acronyme EVA) et les polyuréthanes thermoplastiques (usuellement désignés par l'acronyme TPU).

A titre de copolymères bloc styréniques utilisables comme polymères thermoplastiques mous, dans le cadre de la présente invention, on peut notamment citer le copolymère à blocs de styrène-butadiène-styrène (usuellement désigné par l'acronyme SBS), le Copolymère à blocs de styrène-éthylène-butylène-styrène ou polystyrène polyéthylène-butylène (usuellement désigné par l'acronyme SEBS), le copolymère à blocs de styrène-éthylène-propylène-styrène (usuellement désigné par l'acronyme SEPS), le copolymère à blocs de styrène-éthylène-éthylène-propylène-styrène (usuellement désigné par l'acronyme SEEPS), le polystyrène-bloc-isobutylène-bloc-styrène (usuellement désigné par l'acronyme SIBS), le copolymère à blocs de styrène-isoprène-styrène, etc. On utilisera de préférence le SEBS.

A titre de plastifiant utilisable dans le cadre de la présente invention, on peut notamment citer les huiles minérales naphténiques ou paraffiniques, les huiles végétales ou encore les esters tels que les phtalates, adipates ou sebacates.

De préférence, le plastifiant représente au moins 1%, préférentiellement au moins 2%, préférentiellement au moins 3%, préférentiellement au moins 4%, préférentiellement au moins 5%, préférentiellement au moins 6%, ou préférentiellement au moins 7% en poids du poids total du matériau thermoplastique élastomère.

De préférence, le plastifiant représente 1 à 20 % en poids, encore plus préférentiellement 7 à 19% en poids, du poids total du matériau thermoplastique élastomère.

De manière avantageuse, les polymères thermoplastiques greffés durs et mous peuvent être greffés soit par de l'acide maléique, soit par du méthacrylate de méthyle par de l'acide maléique.

De préférence, les polymères thermoplastiques greffés durs et mous sont greffés par de l'acide maléique. Dans ce cas particulier préférentiel (greffage des polymères thermoplastiques par de l'acide maléique), un matériau thermoplastique selon l'invention pourra présenter la composition suivante :
- 0-20 % en poids de polypropylène (usuellement désigné par l'acronyme PP) ou de polystyrène (usuellement désigné par l'acronyme PS) non greffés par rapport au poids total du matériau thermoplastique élastomère ;
- 1-10 % en poids de polystyrène polyéthylène-butylène (usuellement désigné par l'acronyme SEBS) non greffé et/ou 5-25% en poids de TPV PP/EPDM par rapport au poids total du matériau thermoplastique élastomère,
- 0-15 % en poids de PP greffé par rapport au poids total du matériau thermoplastique élastomère ;
- 0-15 % en poids de SEBS greffé par rapport au poids total du matériau thermoplastique élastomère,
- 1-20 % en poids de plastifiant par rapport au poids total du matériau thermoplastique élastomère.

Selon des modes de réalisation avantageux, la matrice thermoplastique élastomère est exempte d'agent de vulcanisation.

On désigne par « agent de vulcanisation » tout produit connu de l'homme du métier pour provoquer la réticulation des particules de caoutchouc. Des exemples d'agents de vulcanisation connus sont le soufre, les oxydes métalliques, les résines phénoliques, et les peroxydes.

### Particules de caoutchouc réticulé

Par particules de caoutchouc préalablement réticulé, on entend, au sens de la présente invention, des particules de caoutchouc qui ne sont pas réticulées dynamiquement lors de la synthèse du matériau thermoplastique selon l'invention.

Ainsi, les particules de caoutchouc réticulé qui sont utilisées pour la synthèse du matériau selon l'invention ne sont pas des particules ayant subi un traitement de dé-réticulation préalable à la synthèse du matériau. Ces particules de caoutchouc préalablement réticulées peuvent donc être des particules issues directement du broyage d'objets de caoutchouc réticulé, tels que des pneus. Il est possible, avec un pourcentage en poids de particules de caoutchouc préalablement réticulé aussi élevé que 50 à 90% en poids du poids total du matériau thermoplastique élastomère, d'obtenir un matériau thermoplastique élastomère présentant de bonnes caractéristiques élastiques et notamment un allongement à la rupture supérieur à 100%.

Le matériau thermoplastique élastomère selon l'invention présente par ailleurs une structure différente des matériaux thermoplastiques existants, et notamment des vulcanisats thermoplastiques (usuellement dénommés par l'acronyme « TPV », de l'anglais « *Thermoplastic vulcanisate* »), qui sont des élastomères thermoplastiques dans lesquelles une vulcanisation dynamique de particules de caoutchouc, non préalablement réticulées, a lieu pendant le mélange à l'état fondu avec une phase matrice thermoplastique. Il est en effet possible de distinguer, par une analyse du matériau, si les particules de caoutchouc contenues dans le matériau ont été préalablement réticulées ou si, au contraire, elles ont été réticulées dynamiquement lors de la synthèse du matériau.

Ainsi, la fabrication de TPV conduit à inclure dans le matériau des particules de caoutchouc de petite taille, de l'ordre du micromètre et généralement inférieure à 20 µm. Une trop grande taille de particule empêcherait en effet une vulcanisation dynamique efficace. Au contraire, la fabrication du matériau thermoplastique selon l'invention conduit à inclure dans le matériau des particules de caoutchouc de plus grande taille, de l'ordre de 100 µm et généralement supérieure à 80 µm, de préférence comprise entre 80 et 300 µm, voire 400 µm. Le broyage de caoutchouc réticulé ne permet en effet pas d'obtenir des particules de caoutchouc de l'ordre de quelques micromètres.

Par ailleurs, la vulcanisation dynamique des particules de caoutchouc dans la matrice d'un TPV conduit à obtenir une cohésion parfaite entre le caoutchouc et la matrice. Cette cohésion est nécessairement bien moins bonne quand les particules de caoutchouc ont été préalablement réticulées, ce qui peut s'observer par une observation microscopique.

Enfin, la vulcanisation dynamique des particules de caoutchouc, réalisée très rapidement, entraine un degré de vulcanisation des particules de caoutchouc différents de celui des particules de caoutchouc préalablement réticulées, avec notamment des longueurs de chaînes différentes. Enfin, la vulcanisation dynamique peut laisser dans le matériau final des traces des réactifs de vulcanisation qui peuvent être différents des réactifs de vulcanisation statique. L'homme du métier pourra donc déterminer, sans difficulté excessive, si des particules de caoutchouc inclues dans un matériau plastique élastomère sont préalablement réticulées ou, au contraire, ont été réticulées dynamiquement lors de la synthèse du matériau.

De manière avantageuse, les particules de caoutchouc réticulé peuvent représenter 65 à 85% en poids du poids total du matériau thermoplastique élastomère, et la matrice thermoplastique représente 15 à 35% en poids du poids total du matériau thermoplastique élastomère.

De manière avantageuse, les particules de caoutchouc réticulé proviennent du recyclage de déchets industriels ou d'objets finis après usage.

A titre d'exemple d'objets finis après usage pouvant être utilisés pour recycler du caoutchouc réticulé, on peut notamment citer des semelles extérieures de chaussures ou des pneus usagés. Afin de pouvoir diminuer la quantité des composés fonctionnalisés, coûteux, tout en gardant la maîtrise des propriétés finales du matériau TPE, le Demandeur a mis au point un procédé permettant d'en optimiser l'efficacité et donc d'en diminuer la quantité dans le matériau thermoplastique élastomère final, et cela grâce à un procédé en deux étapes dans lequel on mélange un polymère greffé à la poudre d'élastomère dans une première étape de procédé, afin qu'ils adhèrent à la surface des particules de poudre d'élastomère ; puis, on mélange ces particules à l'état de surface modifié, au cours d'une seconde étape, à un polymère non greffé.

Un autre objet de la présente invention est donc un procédé de fabrication d'un matériau thermoplastique élastomère selon l'invention comprenant les étapes suivantes :
- une première étape A) de mélangeage de particules de caoutchouc réticulé et d'un ou plusieurs polymères thermoplastiques greffés durs et/ou mous, pour obtenir un mélange de particules de caoutchouc réticulé ayant un état de surface modifié à l'issue de l'étape A ;
- une deuxième étape B) de mélangeage des particules de caoutchouc réticulé ayant un état de surface modifié obtenues à l'étape A avec un mélange d'un ou plusieurs polymères thermoplastiques non greffés durs et/ou mous, et d'un plastifiant.

Ce procédé de fabrication peut également se définir comme un procédé de fabrication d'un matériau thermoplastique élastomère comprenant la dispersion de particules de caoutchouc préalablement réticulé dans une matrice thermoplastique élastomère, la matrice thermoplastique élastomère comprenant un mélange d'un ou plusieurs polymères thermoplastiques greffés durs et/ou mous, un ou plusieurs polymères thermoplastiques non greffés durs et/ou mous, et un plastifiant,
les particules de caoutchouc réticulé représentant 50 à 90% en poids du poids total du matériau thermoplastique élastomère,
la matrice thermoplastique représentant 10 à 50% en poids du poids total dudit matériau thermoplastique élastomère, et les polymères thermoplastiques greffés durs et/ou mous représentant au plus 9% en poids du poids total du matériau thermoplastique élastomère,
le procédé comprenant les étapes suivantes :
   - une première étape A) de mélangeage de particules de caoutchouc réticulé et d'un ou plusieurs polymères thermoplastiques greffés durs et/ou mous, pour obtenir un mélange de particules de caoutchouc réticulé ayant un état de surface modifié à l'issue de l'étape A ;
   - une deuxième étape B) de mélangeage des particules de caoutchouc réticulé ayant un état de surface modifié obtenues à l'étape A avec un mélange d'un ou plusieurs polymères thermoplastiques non greffés durs et/ou mous, et d'un plastifiant.

De préférence, le plastifiant mélangé à l'étape B) représente 1 à 20% en poids du poids total du matériau thermoplastique élastomère.

De manière avantageuse, l'étape A pourra être réalisée en mélangeant des particules de caoutchouc réticulé avec du PP greffé et de manière optionnelle également du polystyrène polyéthylène-butylène greffé, tandis que l'étape B pourra être réalisée en mélangeant les particules de caoutchouc réticulé obtenues à l'étape A ayant un état de surface modifié, avec du PP ou du PS non greffés d'une part, du SEBS non greffé ou un TPV de type PP/EPDM d'autre part.

De manière avantageuse, selon que l'on cherche à durcir le matériau thermoplastique élastomère ou à l'assouplir davantage, on pourra rajouter, lors de l'étape B, soit du PP non greffé soit un plastifiant. Le degré de dureté est ainsi choisi indépendamment des propriétés de la poudre d'élastomère. Cet ajustement de la dureté de la composition permet d'adapter avantageusement le matériau à son utilisation finale.

### Description détaillée de l'invention

D'autres caractéristiques et avantages de l'invention pourront encore apparaître à l'homme du métier à la lecture des exemples ci-dessous, donnés à titre illustratif et non limitatif.

### EXEMPLES

### Produits et matières premières

Particules de caoutchouc réticulé :
- poudre de pneu commercialisée par la société RubberJet Valley sous la dénomination commerciale RJP200 ;
- poudre de pneu commercialisée par la société Tyre Recycling Solutions sous la dénomination commerciale CW50 ;
- poudre de pneu commercialisée par la société Yildiz Endustri sous la dénomination commerciale « 50-mesh tyre powder », notée ci-après YE50 ;
- poudre de pneu commercialisée par la société GMN sous la dénomination commerciale B11 ;
- poudre de pneu commercialisée par la société Genan sous la dénomination commerciale « Superfine powder », notée ci-après GA30 ;
- poudre de semelles de chaussure commercialisée par la société The 8 Impact, notée ci-après RTP35.

Polymères thermoplastiques non greffés : sous forme de compounds thermoplastiques élastomères TPE non greffés comprenant du polypropylène PP et du SEBS non greffés (dans ce cas le compound est un compound TPS) ou du PP/EPDM (dans ce cas le compound est un compound TPV) et de l'huile paraffinique ;
Les compounds de type TPS sont commercialisés sous les dénominations commerciales :
- SD300-45A par la société Ensoft, dont la part de SEBS est notée ci-après SEBS 1 ;
- CHS90-0000-040 par la société Cabopol, dont la part de SEBS est notée ci-après SEBS 2,

Les compounds de type TPV sont commercialisés sous la dénomination commerciale 121.58 par la société Celanese.

Polymères thermoplastiques greffés :
- PP greffé commercialisé par la société SK Functional Polymers sous la dénomination commerciale OREVAC CA100, noté ci-après F ;
- PP greffé commercialisé par la société Tisan sous la dénomination commerciale OLEBOND 7401CH.

Plastifiant : Huile paraffinique contenue dans les compounds TPE non greffés, et éventuellement supplémentée par de l'huile commercialisée par la société DirectLub sous la dénomination commerciale Mouvement 100.

### TESTS DE CARACTERISATION

### Mesure de la dureté :

La mesure de la dureté est réalisée à l'aide d'une méthode mettant en œuvre un duromètre qui permet de contrôler l'enfoncement d'un poinçon tronconique (avec pointe acérée) actionné par un ressort, ou par un poids, à la surface d'un échantillon du matériau thermoplastique dont on mesure la dureté ; le poinçon et le ressort provoquent le déplacement du poinçon appartiennent au duromètre, qui comprend également un dispositif composé d'un cadran à graduations et d'une aiguille mobile en regard de ce cadran pour la lecture simple et rapide de l'enfoncement du poinçon dans l'échantillon de caoutchouc, traduit en degrés de dureté. Dans le cas de la présente invention, la mesure de la dureté est réalisée conformément à la norme ISO 868, qui donne des valeurs de dureté traduites en Shore A.

### MATERIEL UTILISE POUR LA CARACTERISATION

Mesure de la résistance à la rupture, mesure de l'allongement à la rupture
L'allongement à la rupture ε_{b} d'un matériau polymère est la dernière valeur d'allongement enregistrée avant que la contrainte ne soit tombée à moins de 10% (ou soit égale à 10%) de la résistance.

La résistance à la rupture et l'allongement à la rupture sont mesurés en appliquant la norme ISO 37.

### Mesure de la DRC

La DRC, ou déformation rémanente à la compression, est mesurée en appliquant la norme NF ISO 815. Elle a pour objectif de déterminer la déformation rémanente après compression pour des caoutchoucs vulcanisés ou thermoplastiques. En d'autres termes, il s'agit d'évaluer l'aptitude de matériaux thermoplastiques à conserver leur propriété élastique après compression prolongée à déformation constante à des températures spécifiques (23°C et 70°C dans le cas présent). Cet essai est basé sur le principe que, lorsque l'on maintient un caoutchouc ou plus généralement un matériau thermoplastique, des changements physiques ou chimiques peuvent se produire : une fois que le matériau est relâché, il ne recouvrera pas ses dimensions initiales. En résulte une déformation rémanente après compression de courte durée (habituellement 24h à température élevée).

Il s'agit d'un essai qui dure 24 heures, réalisé à température ambiante ou alors à température élevée (dans le cas présent à 70°C).

### EXEMPLE 1 : Préparation de matériaux thermoplastiques élastomères selon un premier mode de réalisation conforme à l'invention (à base de SEBS 1 et de PP greffé F)

On prépare différentes compositions de matériaux plastiques dont les compositions sont données dans le tableau 1 ci-après.

**[Tableau 1]**

| Essai | Poudre de caoutchouc réticulé | | Composition finale de la matrice thermoplastique élastomère | | Composés ajoutés lors de l'étape B |
|---|---|---|---|---|---|
| | Type | Quantité (%) | Type | Quantité (%) | |
| R64 | RJP200 | 72 | PP | 8,4 | TPE-SD45 |
| | | | PP greffé F | 8 | PP |
| | | | SEBS 1 | 4,6 | |
| | | | Huile | 7 | |
| R71 | CW50 | 72 | PP | 8,4 | TPE-SD45 |
| | | | PP greffé F | 8 | PP |
| | | | SEBS 1 | 4,6 | |
| | | | Huile | 7 | |
| R74 | CW50 | 72 | PP | 3,4 | TPE-SD45 |
| | | | PP greffé F | 8 | |
| | | | SEBS 1 | 6,6 | |
| | | | Huile | 10 | |
| R76 | CW50 | 72 | PP | 3,7 | TPE-SD45 |
| | | | PP greffé F | 6 | |
| | | | SEBS 1 | 7,3 | |
| | | | Huile | 11 | |
| R77 | CW50 | 72 | PP | 2 | TPE-SD45 |
| | | | PP greffé F | 8 | Huile |
| | | | SEBS 1 | 4 | |
| | | | Huile | 14 | |
| R78 | CW50 | 73,8 | PP | 3,4 | TPE-SD45 |
| | | | PP greffé F | 6,2 | |
| | | | SEBS 1 | 6,6 | |
| | | | Huile | 10 | |
| R84 | CW50 | 76,5 | PP | 2,5 | TPE-SD45 |
| | | | PP greffé F | 8,5 | |
| | | | SEBS 1 | 5 | |
| | | | Huile | 7,5 | |
| R85 | CW50 | 78 | PP | 2,7 | TPE-SD45 |
| | | | PP greffé F | 6,2 | |
| | | | SEBS 1 | 5,2 | |
| | | | Huile | 7,9 | |
| R86 | CW50 | 78 | PP | 2,7 | TPE-SD45 |
| | | | PP greffé F | 8,6 | |
| | | | SEBS 1 | 5,2 | |
| | | | Huile | 7,9 | |
| R91 | YE50 | 72 | PP | 3,4 | TPE-SD45 |
| | | | PP greffé F | 8 | |
| | | | SEBS 1 | 6,6 | |
| | | | Huile | 10 | |

On procède, pour la préparation de ces matériaux, de la manière suivante :
- A) mélangeage des particules de caoutchouc réticulé avec du polypropylène greffé ;
- B) mélangeage desdites particules de caoutchouc obtenues à l'issue de l'étape A avec un compound TPS (commercialisé sous la dénomination SD300-45A).

### EXEMPLE 2 : Préparation de matériaux thermoplastiques élastomères selon un deuxième mode de réalisation conforme à l'invention (à base de SEBS2 de PP greffé T)

On prépare différentes compositions de matériaux plastiques dont les compositions sont données dans le tableau 2 ci-après.

**[Tableau 2]**

| Essai | Poudre de caoutchouc réticulé | | Composition finale de la matrice thermoplastique élastomère | | Composés ajoutés lors de l'étape B |
|---|---|---|---|---|---|
| | Type | Quantité (%) | Type | Quantité (%) | |
| R95 | CW50 | 72 | PP | 3,4 | TPE-C50 |
| | | | PP greffé T | 8 | |
| | | | SEBS 2 | 6,6 | |
| | | | Huile | 10 | |
| R96 | YE50 | 72 | PP | 3,4 | TPE-C50 |
| | | | PP greffé T | 8 | |
| | | | SEBS 2 | 6,6 | |
| | | | Huile | 10 | |
| R98 | RTP35 | 72 | PP | 3,4 | TPE-C50 |
| | (semelles de | | PP greffé T | 8 | |
| | chaussures) | | SEBS 2 | 6,6 | |
| | | | Huile | 10 | |
| R100 | B11 | 72 | PP | 3,4 | TPE-C50 |
| | | | PP greffé T | 8 | |
| | | | SEBS 2 | 6,6 | |
| | | | Huile | 10 | |
| R105 | CW50 | 72 | PP | 3 | TPE-C40 |
| | | | PP greffé T | 8 | |
| | | | SEBS 2 | 6 | |
| | | | Huile | 11 | |
| R126 | CW50 | 72 | PP | 8,1 | TPE-C40 |
| | | | PP greffé T | 8 | PP |
| | | | SEBS 2 | 4,2 | |
| | | | Huile | 7,7 | |
| R128 | CW50 | 65,6 | PP | 3 | TPE-C40 |
| | | | PP greffé T | 7,2 | Huile |
| | | | SEBS 2 | 6 | |
| | | | Huile | 18,2 | |

On procède, pour la préparation de ces matériaux, de la même manière qu'à l'exemple 1, mais en remplaçant :
- à l'étape A, le PP greffé F par un PP greffé T, et
- à l'étape B, le compound TPS commercialisé sous la dénomination SD300-45A par le compound TPS commercialisé sous la dénomination CHS90-000-040.

### EXEMPLE 3 : Préparation de matériaux thermoplastiques élastomères selon un troisième mode de réalisation conforme à l'invention (à base de PP/ EPDM réticulé dynamiquement et de PP greffé T)

On prépare une composition de matériau plastique dont la composition est donnée dans le tableau 3 ci-après.

**[Tableau 3]**

| Essai | Poudre de caoutchouc réticulé | | Composition finale de la matrice thermoplastique élastomère | | Composés ajoutés lors de l'étape B |
|---|---|---|---|---|---|
| | Type | Quantité (%) | Type | Quantité (%) | |
| R103 | CW50 | 72 | PP | 3,4 | TPV-60 |
| | | | PP greffé T | 8 | |
| | | | EPDM réticulé dynamiquement | 8,3 | |
| | | | Huile | 8,3 | |

On procède, pour la préparation de ces matériaux, de la même manière qu'à l'exemple 1, mais en remplaçant :
- à l'étape A, le PP greffé F par un PP greffé T, et
- à l'étape B, le compound TPS par le compound TPV 121.58.

### EXEMPLE 4 : Préparation de matériaux thermoplastiques élastomères selon l'art antérieur : absence d'étape A de mélange de la poudre de caoutchouc avec du PP greffé (essai R73) ou absence d'ajout de compound TPE (essai R129)

On prépare une composition de matériau plastique dont la composition est donnée dans le tableau 4 ci-après.

**[Tableau 4]**

| Essai | Poudre de caoutchouc réticulé | | Composition finale de la matrice thermoplastique élastomère | | Composés ajoutés lors de l'étape B |
|---|---|---|---|---|---|
| | Type | Quantité (%) | Type | Quantité (%) | |
| R73 | CW50 | 72 | PP | 16,4 | TPE-SD45 |
| | | | PP greffé F | 0 | PP |
| | | | SEBS | 4,6 | |
| | | | Huile | 7 | |
| R129 | GA30 | 81,1 | PP | 10 | PP |
| | | | PP greffé T | 8,9 | |
| | | | SEBS 2 | 0 | |
| | | | Huile | 0 | |

Pour la préparation du matériau de l'essai R73, on mélange directement les particules de caoutchouc réticulé avec le compound et du PP non greffé.

On procède, pour la préparation du matériau de l'essai R129, de la même manière qu'à l'exemple 1, mais en remplaçant :
- à l'étape A, le PP greffé F par un PP greffé T, et
- à l'étape B, on mélange les particules obtenues à l'étape A avec uniquement du PP : il n'y a pas d'ajout de compound TPE.

### Résultats des essais de caractérisation

Les différents matériaux thermoplastiques réalisés aux exemples 1 à 4 ont tous été caractérisés mécaniquement et les résultats de ces essais sont rassemblés dans les tableaux 5 à 8 ci-après.

Caractérisation des matériaux thermoplastiques de l'exemple 1

**[Tableau 5]**

| Essais | Poudre de caoutchouc réticulé | | Matrice | Dureté | σ rupture | ε rupture | DRC 23°C/24h | DRC 70°C/24h |
|---|---|---|---|---|---|---|---|---|
| | Type | Qté (%) | Type | ShA | MPa | % | % | % |
| R64 | RJP200 | 72 | TPE-SD45 | 75 | 5,78 | 160 | | |
| | | | PP | | | | | |
| R71 | CW50 | 72 | TPE-SD45 | 79 | 8,65 | 210 | | |
| | | | PP | | | | | |
| R74 | CW50 | 72 | TPE-SD45 | 70 | 5,93 | 235 | 22 | 38 |
| R76 | CW50 | 72 | TPE-SD45 | 67 | 4,72 | 226 | 22 | |
| R77 | CW50 | 72 | TPE-SD45 | 55 | 4,08 | 209 | 21 | |
| | | | Huile | | | | | |
| R78 | CW50 | 73,8 | TPE-SD45 | 65 | 5,14 | 224 | 21 | |
| R84 | CW50 | 76,5 | TPE-SD45 | 68 | 5,69 | 197 | 22 | |
| R85 | CW50 | 78 | TPE-SD45 | 66 | 5,6 | 198 | 22 | |
| R86 | CW50 | 78 | TPE-SD45 | 69 | 6,62 | 226 | 23 | |
| R91 | YE50 | 72 | TPE-SD45 | 72 | 5,05 | 181 | 30 | |

Caractérisation des matériaux thermoplastiques de l'exemple 2

**[Tableau 6]**

| Essais | Poudre de caoutchouc réticulé | | Matrice | Dureté | σ rupture | ε rupture | DRC 23°C/24h | DRC 23°C/24h |
|---|---|---|---|---|---|---|---|---|
| | Type | Qté (%) | ShA | MPa | % | MPa | % | % |
| R95 | CW50 | 72 | TPE-C50 | ShA | 6,82 | > 244 | 23 | |
| R96 | YE50 | 72 | TPE-C50 | 74 | 6,77 | 198 | 26 | |
| R98 | RTP35 *(semelles de chaussures)* | 72 | TPE-C50 | 78 | 6,49 | 263 | 31 | |
| R100 | B11 | 72 | TPE-C50 | 68 | 5,48 | 171 | 28 | |
| R105 | CW50 | 72 | TPE-C40 | 67 | 6,94 | 271 | 22 | |
| R126 | CW50 | 72 | TPE-C40 | 77 | 7,84 | 236 | 29 | |
| | | | PP | | | | | |
| R128 | CW50 | 65,6 | TPE-C40 | 51 | 3,63 | 270 | 19 | 71 |
| | | | Huile | | | | | |

Caractérisation des matériaux thermoplastiques de l'exemple 3

**[Tableau 7]**

| Essais | Poudre de caoutchouc réticulé | | Matrice | Dureté | σ rupture | ε rupture | DRC 23°C/24h | DRC 70°C/24h |
|---|---|---|---|---|---|---|---|---|
| | Type | Qté (%) | | ShA | MPa | % | % | % |
| R103 | CW50 | 72 | TPV-60 | 75 | 6,55 | 197 | 25 | |

Caractérisation des matériaux thermoplastiques de l'exemple 4

**[Tableau 8]**

| Essais | Poudre de caoutchouc réticulé | | Matrice | Dureté | σ rupture | ε rupture | DRC 23°C/24h | DRC 70°C/24h |
|---|---|---|---|---|---|---|---|---|
| | Type | Qté (%) | | ShA | MPa | % | % | % |
| R73 | CW50 | 72 | TPE-SD45 | 83 | 7,71 | 121 | 28 | |
| | | | PP | | | | | |
| R129 | GA30 | 81,1 | PP | 87 | 9,16 | 114 | | |

D'une manière générale, les tableaux de résultats 6 à 8 montrent que :
- l'absence de compound TPE ou d'étape A (absence de mélange avec un PP greffé) conduit à un matériau très dur, avec un très faible allongement à la rupture et une résistance à la rupture élevée : essais R129 ou R73 de l'exemple 4 ;
- l'ajout de PP au cours de l'étape B durcit le matériau thermoplastique formé, augmente sa résistance à la rupture, diminue son allongement à la rupture et augmente la DRC :
   o comparaison des essais R73 et R74 notamment (exemple 1) ;
   o comparaison des essais R95 et R129 (exemple 2)
- l'ajout d'huile au cours de l'étape B assouplit le matériau thermoplastique formé, réduit sa résistance à la rupture, diminue la DRC, mais n'a que peu d'impact sur son allongement à la rupture : comparaison des essais R75 et R77 ;
- les semelles de chaussures broyées donnent de très bons résultats également (essai R98 de l'exemple 3).

## Revendications

1. Matériau thermoplastique élastomère comprenant :
- une matrice thermoplastique élastomère,
- des particules de caoutchouc préalablement réticulé dispersées dans ladite matrice,
ledit matériau thermoplastique élastomère étant **caractérisé en ce que** :
- lesdites particules de caoutchouc réticulé représentent 50 à 90% en poids du poids total dudit matériau thermoplastique élastomère, et
- ladite matrice thermoplastique représente 10 à 50% en poids du poids total dudit matériau thermoplastique élastomère, ladite matrice thermoplastique élastomère comprenant un mélange d'un ou plusieurs polymères thermoplastiques greffés durs et/ou mous, un ou plusieurs polymères thermoplastiques non greffés durs et/ou mous, et un plastifiant, et lesdits polymères thermoplastiques greffés durs et/ou mous représentant au plus 9% en poids du poids total dudit matériau thermoplastique élastomère.

2. Matériau thermoplastique élastomère selon la revendication 1, dans lequel ledit plastifiant représente au moins 1% en poids du poids total dudit matériau thermoplastique élastomère.

3. Matériau thermoplastique élastomère selon la revendication 1 ou 2, dans lequel ledit plastifiant représente 1 à 20% en poids du poids total dudit matériau thermoplastique élastomère.

4. Matériau thermoplastique élastomère selon l'une quelconque des revendications 1 à 3, dans lequel ledit plastifiant est choisi parmi : les huiles minérales naphténiques ou paraffiniques, les huiles végétales, ou les esters.

5. Matériau thermoplastique élastomère selon l'une quelconque des revendications 1 à 4, dans lequel lesdites particules de caoutchouc dispersées dans ladite matrice ont une taille supérieure à 80 µm, de préférence comprise entre 80 et 400 µm.

6. Matériau thermoplastique élastomère selon l'une quelconque des revendications 1 à 5, dans lequel lesdites particules de caoutchouc réticulé représentent 65 à 85% en poids du poids total dudit matériau thermoplastique élastomère, et ladite matrice thermoplastique représente 15 à 35 % en poids du poids total dudit matériau thermoplastique élastomère.

7. Matériau thermoplastique élastomère selon l'une quelconque des revendications 1 à 6, dans lequel les particules de caoutchouc réticulé proviennent du recyclage de déchets industriels ou d'objets finis après usage, de préférence des semelles extérieures de chaussures ou de pneus usagés.

8. Matériau thermoplastique élastomère selon l'une quelconque des revendications 1 à 7, dans lequel lesdits polymères thermoplastiques durs, qu'ils soient ou non greffés, sont choisis dans le groupe comprenant les polyoléfines et le polystyrène, et lesdits polymères thermoplastiques mous, qu'ils soient ou non greffés, sont choisis dans le groupe comprenant des copolymères thermoplastiques élastomères.

9. Matériau thermoplastique élastomère selon la revendication 8, dans lequel lesdits polymères thermoplastiques mous, qu'ils soient ou non greffés, sont choisis dans le groupe comprenant les copolymères bloc styréniques, les thermoplastiques vulcanisés (usuellement désignés par l'acronyme TPV) de type monomère éthylène propylène diène vulcanisé dynamiquement (usuellement désigné par l'acronyme EPDM) dans une matrice polypropylène (PP/EPDM), les éthylène vinyle acétate (usuellement désignés par l'acronyme EVA) et les polyuréthanes thermoplastiques (usuellement désignés par l'acronyme TPU).

10. Matériau thermoplastique élastomère selon l'une quelconque des revendications 1 à 9, dans lequel lesdits polymères thermoplastiques greffés durs et mous sont greffés par de l'acide maléique ou du méthacrylate de méthyle.

11. Matériau thermoplastique élastomère selon la revendication 10, dans lequel lesdits polymères thermoplastiques greffés durs et mous sont greffés par de l'acide maléique.

12. Matériau thermoplastique élastomère selon la revendication 11, comprenant :
- 0-20 % en poids de polypropylène ou de polystyrène non greffés, par rapport au poids total du matériau thermoplastique élastomère ;
- 1-10 % en poids de polystyrène polyéthylène-butylène non greffé et/ou 5-25% en poids de TPV PP/EPDM, par rapport au poids total du matériau thermoplastique élastomère,
- 0-15 % en poids de polypropylène greffé, par rapport au poids total du matériau thermoplastique élastomère ;
- 0-15 % en poids de polystyrène polyéthylène-butylène greffé, par rapport au poids total du matériau thermoplastique élastomère,
- 1-20 % en poids de plastifiant, par rapport au poids total du matériau thermoplastique élastomère.

13. Procédé de fabrication d'un matériau thermoplastique élastomère comprenant une dispersion de particules de caoutchouc préalablement réticulé dans une matrice thermoplastique élastomère,
ladite matrice thermoplastique élastomère comprenant un mélange d'un ou plusieurs polymères thermoplastiques greffés durs et/ou mous, un ou plusieurs polymères thermoplastiques non greffés durs et/ou mous, et un plastifiant,
lesdites particules de caoutchouc réticulé représentant 50 à 90% en poids du poids total dudit matériau thermoplastique élastomère,
ladite matrice thermoplastique représentant 10 à 50% en poids du poids total dudit matériau thermoplastique élastomère, et
lesdits polymères thermoplastiques greffés durs et/ou mous représentant au plus 9% en poids du poids total dudit matériau thermoplastique élastomère.

14. Procédé de fabrication d'un matériau thermoplastique tel que défini selon l'une quelconque des revendications 1 à 12, comprenant les étapes suivantes :
- une première étape A de mélangeage de particules de caoutchouc réticulé et d'un ou plusieurs polymères thermoplastiques greffés durs et/ou mous, pour obtenir un mélange de particules de caoutchouc réticulé ayant un état de surface modifié ;
- une deuxième étape B de mélangeage desdites particules de caoutchouc réticulé ayant un état de surface modifié obtenues à l'issue de l'étape A avec un mélange d'un ou plusieurs polymères thermoplastiques non greffés durs et/ou mous, et d'un plastifiant.

15. Procédé de fabrication d'un matériau thermoplastique selon la revendication 14, dans lequel :
- l'étape A est réalisée en mélangeant des particules de caoutchouc réticulé avec du polypropylène greffé et de manière optionnelle également du polystyrène polyéthylène-butylène greffé ; et
- l'étape B est réalisée en mélangeant lesdites particules de caoutchouc réticulé obtenues à l'étape A ayant un état de surface modifié, avec du polypropylène ou du polystyrène non greffés d'une part, du polystyrène polyéthylène-butylène non greffé ou le TPV PP/EPDM d'autre part.
